# EUROPÄISCHE PATENTSCHRIFT

(11) **EP 2 687 187 B1**
(45) Veröffentlichungstag und Bekanntmachung des Hinweises auf die Patenterteilung: **12.11.2014**
(21) Anmeldenummer: 12177012.7
(22) Anmeldetag: 19.07.2012
(51) Int. Cl.: A61C 1/00, A61C 1/08, A61B 17/00

(54) **Medizinisches, insbesondere dentales, Handstück**
Medical, in particular dental handpiece
Pièce à main médicale, en particulier dentaire

(43) Veröffentlichungstag der Anmeldung: 22.01.2014
(73) Patentinhaber: W & H Dentalwerk Bürmoos GmbH, 5111 Bürmoos (AT)
(72) Erfinder: Pruckner, Christian, 1190 Wien (AT); Mangelberger, Michael, 5113 St. Georgen (AT)
(74) Vertreter: Benda, Ralf

(56) Entgegenhaltungen:
- EP-A1- 2 353 539
- EP-A1- 2 524 666
- EP-A2- 2 524 667
- DE-A1- 10 259 798

## Beschreibung

Die vorliegende Erfindung betrifft ein medizinisches, insbesondere dentales, Handstück mit einer Beleuchtungsvorrichtung, welche zumindest ein optisches Halbleiterelement aufweist, und mit einer Temperaturmessvorrichtung.

Aus den Patentanmeldungen EP 11166638.4 und EP 2353539 ist ein medizinisches, insbesondere dentales, Handstück mit einer Temperaturmessvorrichtung bekannt.

Der vorliegenden Erfindung liegt die Aufgabe zugrunde, die lmplementierung oder die Einbausituation der Temperaturmessvorrichtung, insbesondere eines Temperatursensors, am Handstück, vorzugsweise in dem Kopfabschnitt des Handstücks, zu optimieren, so dass der Temperatursensor trotz der großen Anzahl an Bauteilen und des damit sehr begrenzten Platzangebots im Handstück, insbesondere im Kopfabschnitt des Handstücks, anordenbar und betreibbar ist.

Diese Aufgabe wird durch ein medizinisches, insbesondere dentales, Handstück, gelöst, das umfasst: Eine Beleuchtungsvorrichtung zur Abgabe von Strahlung, insbesondere von sichtbarem Licht, auf eine Behandlungsstelle, wobei die Beleuchtungsvorrichtung vorzugsweise zumindest ein optisches Halbleiterelement aufweist, und einen, vorzugsweise im Inneren des Handstücks angeordneten und mit elektrischer Energie versorgbaren oder betreibbaren, Temperatursensor, wobei zumindest eine gemeinsame, im Handstück vorgesehene elektrische Signal- oder Versorgungsleitung für die Beleuchtungsvorrichtung und den Temperatursensor vorgesehen ist.

Damit ist für den Temperatursensor und die Beleuchtungsvorrichtung zur Beleuchtung der Behandlungsstelle eine gemeinsame elektrische Signal- oder elektrische Versorgungsleitung geschaffen, über welche der Temperatursensor und die Beleuchtungsvorrichtung ihre jeweiligen elektrischen (Versorgungs-)Signale erhalten und über welche das Messsignal des Temperatursensor leitbar ist. Damit entfällt die Notwendigkeit, für den Temperatursensor eine eigene elektrische Signalleitung und eigene Anschlüsse an eine Energiequelle vorzusehen.

Der mit elektrischer Energie versorgbare oder betreibbare Temperatursensor umfasst zum Beispiel einen Sensor mit einem Material, dessen elektrischer Widerstand temperaturabhängig ist, insbesondere einen NTC-Widerstand, einen Infrarot-Sensor oder ein Thermoelement. Der Temperatursensor ist insbesondere dazu ausgebildet, die Temperatur des Handstücks, insbesondere die Temperatur im Inneren des Handstücks, und / oder die Temperatur zumindest eines Bauteils des Handstücks zu bestimmen. Der Temperatursensor ist vorzugsweise auf oder an einem Bauteil des Handstücks, zum Beispiel der Außenhülse, der Beleuchtungsvorrichtung oder einem Lager, angeordnet oder befestigt. Alternativ ist der Temperatursensor frei in einem Innenraum des Handstücks angeordnet und im Wesentlichen nur an einer elektrischen Signalleitung befestigt. Der Temperatursensor kann einen oder mehrere Sensoren aufweisen. Der Temperatursensor ist ausgebildet, ein Temperaturmesssignal zu generieren, zum Beispiel durch eine Änderung eines Parameters des elektrischen Versorgungssignals in Abhängigkeit von der Temperatur, zum Beispiel der Stromstärke.

Die Beleuchtungsvorrichtung zur Abgabe von Strahlung auf eine Behandlungsstelle umfasst vorzugsweise eine oder mehrere, zum Beispiel drei, vier oder fünf, optische Halbleiterelemente, insbesondere Leuchtdioden. Die Beleuchtungsvorrichtung kann jedoch klarerweise auch andere Strahlungsquellen aufweisen, zum Beispiel eine Glühbirne oder eine Gasentladungslampe. Die Beleuchtungsvorrichtung, insbesondere das zumindest eine optische Halbleiterelement, ist vorzugsweise entweder am Kopfabschnitt des Handstücks, insbesondere rund um eine Werkzeugaufnahmeöffnung des Kopfabschnitts, oder angrenzend an den Kopfabschnitt angeordnet. Die Beleuchtungsvorrichtung ist insbesondere an jener Seite des Handstücks vorgesehen, an welcher die Werkzeugaufnahmeöffnung angeordnet ist. Die Beleuchtungsvorrichtung ist insbesondere ringförmig ausgebildet und umgibt vorzugsweise die Werkzeugaufnahmeöffnung des Kopfabschnitts. Insbesondere ist durch die Innenbohrung der ringförmigen Beleuchtungsvorrichtung ein Werkzeug in eine Werkzeughalterung des Handstücks einsetzbar oder daraus entfernbar. Vorzugsweise ist am oder im Körper der Beleuchtungsvorrichtung zumindest eine Öffnung und / oder eine Kanal vorgesehen, über welche(n) ein Fluid, insbesondere ein Kühlmedium, zum Beispiel ein Wasser-Luft-Gemisch in Richtung der Behandlungsstelle abgebbar ist.

Die gemeinsame, im Handstück vorgesehene elektrische Signalleitung oder elektrische Versorgungsleitung, die zum Beispiel einen oder mehrere Leitungsdrähte umfasst, verbindet die Beleuchtungsvorrichtung und den Temperatursensor mit einer elektrischen Energiequelle, insbesondere mit einer Gleichstromquelle und / oder einer Gleichspannungsquelle. Die elektrische Energiequelle kann in dem Handstück angeordnet sein oder außerhalb des Handstücks vorgesehen sein, zum Bespiel in einem mit dem Handstück verbindbaren Adapter- oder Kupplungsteil oder in einer Steuervorrichtung. Die, insbesondere im Handstück vorgesehene, elektrische Energiequelle umfasst zum Beispiel eine Batterie, einen Akkumulator oder einen Generator, der vorzugsweise mit einem elektrischen Gleichrichter verbunden ist.

Gemäß einem Ausführungsbeispiel umfasst die zumindest eine gemeinsame, im Handstück vorgesehene elektrische Signalleitung eine erste, mit der Beleuchtungsvorrichtung, vorzugsweise der Strahlungsquelle, insbesondere dem zumindest einen optischen Halbleiterelement, verbundene elektrische Zweigleitung und eine zweite mit dem Temperatursensor verbundene elektrische Zweigleitung. Damit ist es in vorteilhafter Weise möglich, die Beleuchtungsvorrichtung und den Temperatursensor räumlich getrennt, gegebenenfalls weit voneinander beabstandet und jeweils an ihren optimalen Positionen anzuordnen.

Gemäß einem anderen Ausführungsbeispiel verbindet die Beleuchtungsvorrichtung die zumindest eine gemeinsame, im Handstück vorgesehene elektrische Signalleitung elektrisch mit dem Temperatursensor. Vorzugsweise weist die Beleuchtungsvorrichtung eine Platine oder Leiterplatte auf, wobei die zumindest eine gemeinsame, im Handstück vorgesehene elektrische Signalleitung über die Platine oder über auf der Platine aufgebrachte elektrische Kontakte mit dem Temperatursensor elektrisch verbunden ist. Dadurch wird ein besonders kompakter und platzsparender Aufbau erreicht, bei welchem die Beleuchtungsvorrichtung, insbesondere deren Platine, auch als elektrischer Leiter für den Temperatursensor ausgebildet ist. Die auf der Platine aufgebrachten elektrischen Kontakte umfassen insbesondere eine Metalllegierung, vorzugsweise ein Metalllot (so genannte Metallpads).

Wahlweise sind 1.) die Platine und der Temperatursensor voneinander beabstandet und insbesondere durch eine elektrische Signalleitung miteinander elektrisch verbunden oder 2.) der Temperatursensor ist unmittelbar auf der Platine oder unmittelbar auf zumindest einem auf der Platine aufgebrachten elektrischen Kontakt befestigt. Gemäß 1.) kann der Temperatursensor in vorteilhafter Weise an von der Beleuchtungsvorrichtung beabstandeten Stellen und / oder Bauteilen und / oder Wärmequellen angeordnet werden, wodurch insbesondere auch eine Fehlmessung durch von der Beleuchtungsvorrichtung erzeugter Wärme vermeidbar ist. Gemäß 2.) wird eine besonders kompakte und platzsparende Einheit, bestehend aus dem Temperatursensor und der Beleuchtungsvorrichtung geschaffen, die insbesondere auch eine Vereinfachung bei der Montage bedingt.

Vorzugsweise weist die Beleuchtungsvorrichtung eine Kapselung mit einem transparenten Fenster, insbesondere einem Glasfenster, auf, wobei die Strahlungsquelle, vorzugsweise zumindest ein optisches Halbleiterelement, in der Kapselung aufgenommen ist und wobei bevorzugt die Kapselung einen die Platine umfassenden Sockel aufweist. Durch die Kapselung ist das zumindest eine optische Halbleiterelement vor Verunreinigungen und negativen Einflüssen geschützt. Die Kapselung weist neben dem Sockel zum Beispiel eine mit dem Sockel verbundene Kappe oder Hülse auf, an welcher das transparente Fenster vorgesehen ist. Der Sockel und / oder die Kappe ist / sind zum Beispiel im Wesentlichen aus Keramik oder Glas oder Kunststoff gefertigt. Gemäß einem bevorzugten Ausführungsbeispiel sind der Sockel im Wesentlichen aus Keramik oder Glas und die Kappe aus Metall gefertigt. Zur Verbindung der Strahlungsquelle oder des zumindest einen optischen Halbleiterelements mit einer elektrischen Energiequelle ist der Sockel und / oder die Platine von einem elektrischen Leiter durchkontaktiert und vorzugsweise an einer Außenseite mit elektrischen Kontakten versehen, die insbesondere eine Metalllegierung umfassen, vorzugsweise ein Metalllot (so genannte Metallpads). Im Inneren der Kapselung können zum Beispiel neben dem zumindest einen optischen Halbleiterelement ein Konvertierungselement zur Umwandlung der Wellenlänge der von dem zumindest einen optischen Halbleiterelement emittierten Strahlung, ein optisches Bauteil, zum Beispiel ein Lichtleitelement oder ein Reflektorelement, oder ein elektrisches Bauteil, zum Beispiel eine Spule für eine induktiv gekoppelte Versorgung des optischen Halbleiterelements mit elektrischer Energie oder ein Element zur Anpassung der elektrischen Spannung und / oder Stromstärke für das zumindest eine Halbleiterelement vorgesehen sein.

Vorzugsweise ist der Temperatursensor direkt oder indirekt (mechanisch) an der Beleuchtungsvorrichtung befestigt, so dass der Temperatursensor und die Beleuchtungsvorrichtung bevorzugt eine Einheit bilden, insbesondere eine untrennbar miteinander verbundene Einheit. Eine direkte mechanische Befestigung ist zum Beispiel durch Verlöten des Temperatursensors mit der Platine oder mit einem darauf aufgebrachten elektrischen Kontakt, insbesondere einer Metalllegierung, erzielbar. Eine indirekte mechanische Befestigung ist zum Beispiel durch eine elektrische Signalleitung herstellbar, welche die Platine oder einen darauf aufgebrachten elektrischen Kontakt, insbesondere eine Metalllegierung, mit dem Temperatursensor verbindet und daran befestigt. Eine mechanische Befestigung des Temperatursensors an der Beleuchtungsvorrichtung erleichtert zum Beispiel die Montage und Positionierung des Temperatursensors in dem Handstück.

Gemäß einem Ausführungsbeispiel weist das Handstück ein Kopfteil auf, an welchem eine in Bewegung versetzbare Werkzeughalterung vorgesehen ist, wobei der Temperatursensor in dem Kopfteil oder angrenzend an das Kopfteil angeordnet ist. Bevorzugt befindet sich der Temperatursensor in unmittelbarer Nähe von einer oder mehreren (potentiellen) Wärmequellen, vorzugsweise in unmittelbarer Nähe von einer oder mehreren, in dem Kopfteil angeordneten (potentiellen) Wärmequellen, insbesondere von in Bewegung versetzbaren Bauteilen des Handstücks, wie zum Beispiel der Werkzeughalterung, Lagern für die Werkzeughalterung, etc. Bevorzugt ist die Beleuchtungsvorrichtung zur Abgabe von Strahlung, insbesondere von sichtbarem Licht, insbesondere die Strahlungsquelle, vorzugsweise das zumindest eine optische Halbleiterelement, derart an dem Handstück angeordnet, dass die emittierte Strahlung direkt in Richtung oder auf die Behandlungsstelle abgebbar ist. Besonders bevorzugt ist auch die Beleuchtungsvorrichtung, insbesondere das zumindest eine optische Halbleiterelement, in dem Kopfteil, an dem Kopfteil oder angrenzend an das Kopfteil angeordnet. Damit wird in vorteilhafter Weise die gemeinsame Versorgung des Temperatursensors und der Beleuchtungsvorrichtung mit elektrischen Signalen durch zumindest einen Großteil der Länge des Handstücks möglich.

Die Beleuchtungsvorrichtung und der Temperatursensor können elektrisch parallel oder in Serie angeordnet sein. Die Beleuchtungsvorrichtung und der Temperatursensor sind über die gemeinsame, im Handstück vorgesehene elektrische Signalleitung mit einer einzigen, gemeinsamen Energiequelle verbunden oder verbindbar.

Eine medizinische, insbesondere dentale, Behandlungsvorrichtung, umfasst ein Handstück mit einer Beleuchtungsvorrichtung zur Abgabe von Strahlung, insbesondere von sichtbarem Licht, auf eine Behandlungsstelle, wobei die Beleuchtungsvorrichtung vorzugsweise zumindest ein optisches Halbleiterelement aufweist, einem, vorzugsweise im Inneren des Handstücks angeordneten, Temperatursensor, und zumindest einer gemeinsamen, im Handstück vorgesehenen elektrischen Signalleitung für die Beleuchtungsvorrichtung und den Temperatursensor und eine elektrisch mit der zumindest einen gemeinsamen, im Handstück vorgesehenen elektrischen Signalleitung verbundene Steuer- und / oder Regelvorrichtung, welche ausgebildet ist, abwechselnd oder zeitlich versetzt ein der Beleuchtungsvorrichtung, insbesondere dem zumindest einen optischen Halbleiterelement, zugeordnetes erstes elektrisches (Versorgungs-)Signal und ein dem Temperatursensor zugeordnetes zweites elektrisches (Versorgungs-)Signal abzugeben. Die Steuer- und / oder Regelvorrichtung umfasst bevorzugt einen Mikrocontroller. Vorzugsweise unterscheiden sich das erste und das zweite elektrische Signal voneinander in zumindest einem Parameter, zum Beispiel in der Stromflussrichtung, im Wert der elektrischen Spannung oder der Stromstärke. Demgemäß ist die Steuer- und / oder Regelvorrichtung dazu ausgebildet, (durch eine Änderung der Richtung der elektrischen Potentiale) das erste und zweite elektrische Signal in unterschiedliche Stromflussrichtungen zu senden und / oder ein erstes und zweites elektrisches Signal mit unterschiedlichen elektrischen Spannungen und / oder Stromstärken zu erzeugen. Bevorzugt weist die Steuer- und / oder Regelvorrichtung eine Konstantstromquelle zum Erzeugen des ersten elektrischen Signals und eine Konstantspannungsquelle zum Erzeugen des zweiten elektrischen Signals auf. Durch diese Maßnahmen ist es in vorteilhafter Weise möglich, der Beleuchtungsvorrichtung oder dem Temperatursensor ein passendes (erstes oder zweites) elektrisches Versorgungssignal zukommen zu lassen.

Gemäß einem Ausführungsbeispiel ist die Steuer- und / oder Regelvorrichtung ausgebildet, ein Temperaturmesssignal von dem Temperatursensor zu empfangen, mit einem vorbestimmten Temperaturgrenzwert zu vergleichen und bei Erreichen oder Überschreiten des vorbestimmten Temperaturgrenzwerts den Betrieb des Handstücks zu unterbrechen oder die Leistung eines Antriebs des Handstücks zu verändern, insbesondere zu verringern, und / oder eine Warnvorrichtung zur Warnung des Anwenders zu betätigen. Zur Unterbrechung des Betriebs oder zur Änderung der Leistung des Handstücks ist die Steuer- und / oder Regelvorrichtung zum Beispiel dazu ausgebildet, die Abgabe oder Leitung eines Antriebssignals und / oder eines Antriebsmedium an einen Antrieb, zum Beispiel an einen elektrisch oder mit Luft betriebenen Motor oder an ein Fluid betriebenes Laufrad, zu unterbinden oder zu ändern. Die Warnvorrichtung ist zum Beispiel durch eine akustische Signalabgabevorrichtung, eine visuelle Anzeige, zum Beispiel zumindest eine Leuchtdiode auf dem Handstück oder ein Display, oder durch eine taktile Signalabgabevorrichtung gebildet. Die Warnvorrichtung ist zum Beispiel elektrisch mit der Steuer- und / oder Regelvorrichtung verbunden oder als Teil der Steuer- und / oder Regelvorrichtung ausgebildet.

Ein Verfahren zum Betrieb einer derartigen medizinischen, insbesondere dentalen, Behandlungsvorrichtung ist dadurch definiert, dass die Steuer- und / oder Regelvorrichtung abwechselnd ein erstes elektrisches Signal an die Beleuchtungsvorrichtung, insbesondere an das zumindest eine optische Halbleiterelement, und ein zweites elektrisches Signal an den Temperatursensor abgibt. Vorzugsweise erzeugt die Steuer- und / oder Regelvorrichtung unter Änderung der Richtung des elektrischen Potentials und der Stromflussrichtung abwechselnd ein erstes elektrisches Signal mittels einer Konstantstromquelle und ein zweites elektrisches Signal mittels einer Konstantspannungsquelle, so dass das erste und zweite elektrische Signal in unterschiedliche Stromflussrichtungen fließen.

Gemäß einem alternativen Ausführungsbeispiel ist es auch möglich ein Verfahren zum Betrieb einer derartigen medizinischen, insbesondere dentalen, Behandlungsvorrichtung zu schaffen, bei dem das der Beleuchtungsvorrichtung, insbesondere dem zumindest einen optischen Halbleiterelement, zugeordnete, erste elektrische (Versorgungs-)Signal und das dem Temperatursensor zugeordnete, zweite elektrische (Versorgungs-)Signal im Wesentlichen gleichzeitig von einer Steuer- und / oder Regelvorrichtung abgebbar sind oder abgegeben werden. Das erste und das zweite Signal sind dabei vorzugsweise durch einen Konstantstrom mit einem aufmodulierten Wechselanteil oder einem aufmodulierten Wechselstromanteil gebildet. Es ist somit ein gleichzeitiges Versorgen der Beleuchtungsvorrichtung und des Temperatursensors möglich.

Eine entsprechende medizinische, insbesondere dentale, Behandlungsvorrichtung, umfasst ein Handstück mit einer Beleuchtungsvorrichtung zur Abgabe von Strahlung, insbesondere von sichtbarem Licht, auf eine Behandlungsstelle, wobei die Beleuchtungsvorrichtung vorzugsweise zumindest ein optisches Halbleiterelement aufweist, einem, vorzugsweise im Inneren des Handstücks angeordneten, Temperatursensor, und zumindest einer gemeinsamen, im Handstück vorgesehenen elektrischen Signalleitung für die Beleuchtungsvorrichtung und den Temperatursensor und eine elektrisch mit der zumindest einen gemeinsamen, im Handstück vorgesehenen elektrischen Signalleitung verbundene Steuer- und / oder Regelvorrichtung, welche ausgebildet ist, gleichzeitig ein der Beleuchtungsvorrichtung, insbesondere dem zumindest einen optischen Halbleiterelement, zugeordnetes erstes elektrisches (Versorgungs-)Signal und ein dem Temperatursensor zugeordnetes zweites elektrisches (Versorgungs-)Signal abzugeben. Das erste und das zweite Signal sind dabei vorzugsweise durch ein elektrisches Versorgungssignal gebildet, das einen Konstantstrom mit einem aufmodulierten Wechselanteil oder einem aufmodulierten Wechselstromanteil umfasst. Die Beleuchtungsvorrichtung, bevorzugt das zumindest eine optische Halbleiterelement, und der Temperatursensor sind insbesondere elektrisch parallel geschaltet oder angeordnet. Dem Temperatursensor ist in Serie ein Filter oder eine elektrische Weiche zum Filtern der Gleichstrom- und Wechselstromanteile des elektrischen Versorgungssignals vorgeschaltet, zum Beispiel ein Kondensator.

Die Behandlungsvorrichtung umfasst zum Beispiel eine Gleichstromquelle zur Abgabe eines Konstantstroms, insbesondere zur Versorgung der Beleuchtungsvorrichtung oder des zumindest einen optischen Halbleiterelements, sowie eine elektrische Vorrichtung, die ausgebildet ist, auf den Konstantstrom einen Wechselanteil oder Wechselstromanteil aufzumodulieren. Der aufmodulierte Wechsel(strom)anteil ist für die Versorgung des Temperatursensors vorgesehen und beträgt zum Beispiel etwa 5 % - 15 %, vorzugsweise etwa 10 %, der Stromstärke des Konstantstroms, zum Beispiel etwa 4mA. Der Temperatursensor, der insbesondere ein Material aufweist, dessen elektrischer Widerstand temperaturabhängig ist, vorzugsweise einen NTC-Widerstand, ist ausgebildet, den Spannungswert des elektrischen Versorgungssignals, insbesondere des aufmodulierten Wechsel(strom)anteils, in Abhängigkeit der Temperatur zu ändern, wodurch ein Temperaturmesssignal gebildet wird. Die Steuer- und / oder Regelvorrichtung ist wie im Vorstehenden beschrieben, ausgebildet, den Spannungswert oder das Temperaturmesssignal zu empfangen, mit einem Vergleichswert zu vergleichen und den Betrieb des Handstücks zu stoppen, zu ändern und / oder ein Warnsignal zu generieren.

Die Erfindung wird nachfolgend anhand bevorzugter Ausführungsbeispiele und Bezug nehmend auf die beigefügten Zeichnungen erläutert:

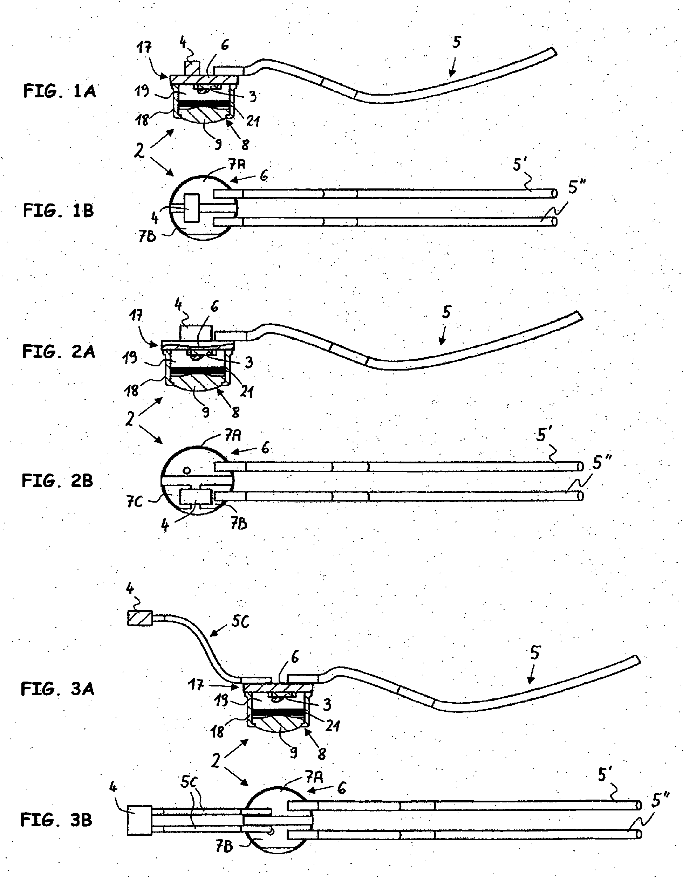

Die Figuren 1A - 5B zeigen jeweils in einer seitlichen Schnittdarstellung und in einer Aufsicht fünf unterschiedliche Ausführungsbeispiele einer Einheit, die eine Beleuchtungsvorrichtung mit einem optischen Halbleiterelement zur Abgabe von Strahlung, einen Temperatursensor und eine gemeinsame elektrische Signalleitung für das optische Halbleiterelement und den Temperatursensor umfasst.

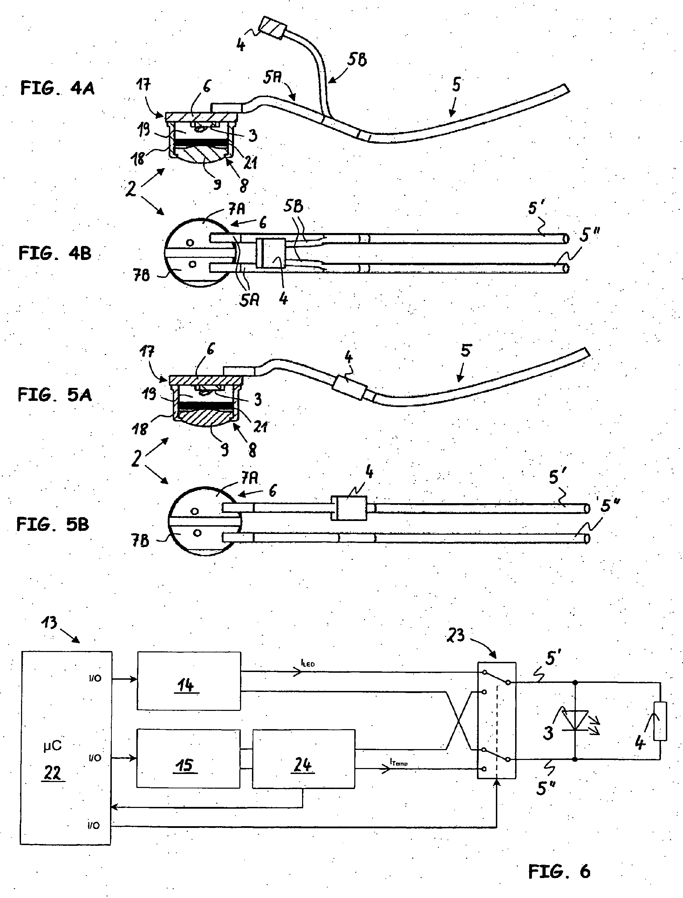

Figur 6 zeigt eine schematische Darstellung einer Steuer- und / oder Regelvorrichtung, die abwechselnd ein der Beleuchtungsvorrichtung zugeordnetes erstes elektrisches Signal und ein dem Temperatursensor zugeordnetes zweites elektrisches Signal abgibt.

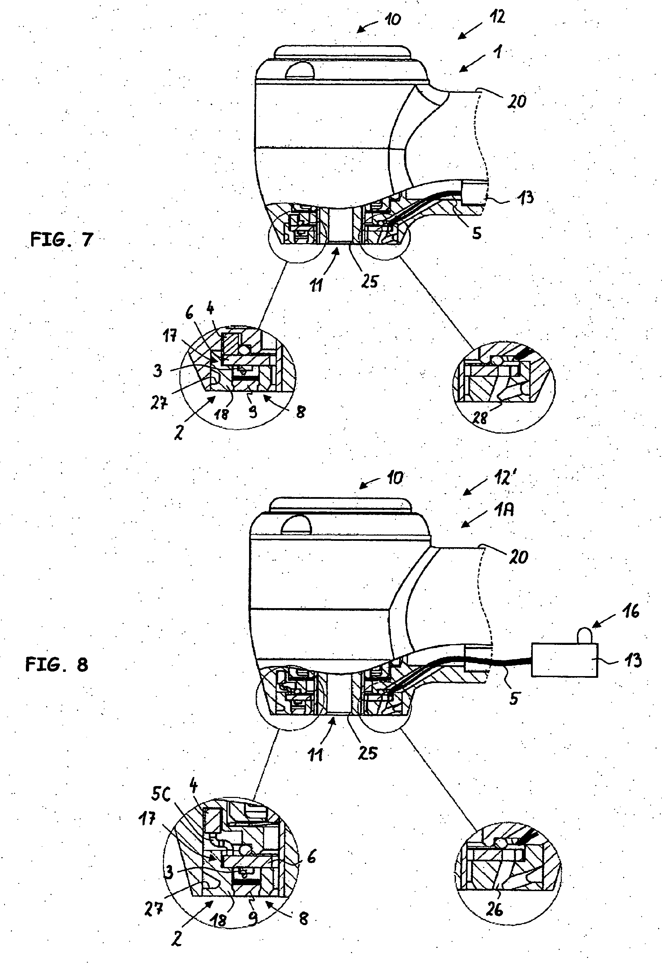

Die Figuren 7 und 8 zeigen zwei Ausführungsbeispiele von medizinische, insbesondere dentale, Behandlungsvorrichtung oder medizinischen, insbesondere dentalen, Handstücken mit jeweils einer Einheit, die eine Beleuchtungsvorrichtung mit einem optischen Halbleiterelement zur Abgabe von Strahlung, einen Temperatursensor und eine gemeinsame elektrische Signalleitung für das optische Halbleiterelement und den Temperatursensor umfasst.
Die in den Figuren 1A - 5B dargestellten, insbesondere eine gemeinsame elektrische Versorgung, aufweisenden Einheiten zur Temperaturmessung und Beleuchtung weisen in vielen Merkmalen einen ähnlichen oder gleichen Aufbau auf, so dass die folgende Beschreibung auf alle diese Einheiten der Figuren 1A - 5B zutrifft. Ähnliche oder gleiche Bauteile sind dem gemäß mit gleichen Bezugszeichen versehen.

Die Einheiten zur Temperaturmessung und Beleuchtung umfassen einen Temperatursensor 4, eine Beleuchtungsvorrichtung 2 und eine gemeinsame, elektrische Signalleitung oder Versorgungsleitung 5. Wie aus den Figuren 7, 8 zu erkennen ist, ist die gemeinsame, elektrische Signalleitung 5 im Inneren eines Handstücks 1, 1A, insbesondere im Inneren einer Außenhülse 20 des Handstücks 1, 1A, vorgesehen.

Der Temperatursensor 4 umfasst einen elektrischen oder elektrisch versorgbaren Sensor, zum Beispiel einen Sensor mit einem Material, dessen elektrischer Widerstand temperaturabhängig ist, insbesondere einen NTC-Widerstand, einen Infrarot-Sensor oder ein Thermoelement. Der Temperatursensor 4 ist insbesondere dazu ausgebildet, die Temperatur eines Handstücks 1, 1A (siehe Figuren 7, 8), insbesondere die Temperatur im Inneren des Handstücks 1, 1A, und / oder die Temperatur zumindest eines Bauteils des Handstücks 1, 1A zu bestimmen.

Die Beleuchtungsvorrichtung 2 weist zumindest ein optisches Halbleiterelement 3 auf. Das zumindest eine optische Halbleiterelement 3 ist auf einer Platine 6 befestigt. Die Platine 6 umfasst vorzugsweise elektrisch nicht leitendes Material wie zum Beispiel keramisches Material oder glaskeramisches Material oder Glas oder Kunststoff. Die Platine 6 verbindet mechanisch und insbesondere elektrisch das zumindest eine optische Halbleiterelement 3 mit der elektrischen Signalleitung 5. Dazu ist die Platine 6 von elektrischen Leitern durchsetzt, die vorzugsweise in Bohrungen der Platine 6 aufgenommen sind und das Halbleiterelement 3 mit der elektrischen Signalleitung 5 verbinden, und / oder die Platine 6 umfasst elektrisch leitende Schichten und / oder an zumindest einer ihrer Oberflächen angeordnete Kontakte 7A, 7B, 7C. Die Platine 6 ist Teil eines Sockels 17 der Beleuchtungsvorrichtung 2 oder bildet vorzugsweise den Sockel 17.

Die Beleuchtungsvorrichtung 2 umfasst des Weiteren eine Hülse 18 und ein transparentes Fenster 9. Die Hülse 18 ist zum Beispiel aus Metall oder aus elektrisch nicht leitendem Material wie zum Beispiel keramischem Material oder Glas oder Kunststoff hergestellt. Das transparente Fenster 9 ist derart ausgebildet und angeordnet, dass von dem zumindest einen optischen Halbleiterelement 3 emittierte Strahlung durch das Fenster 9 an die Umgebung abgebbar ist. Das Fenster 9 umfasst zum Beispiel ein Oxidglas oder ein Silikatglas oder ein Chalkogenidglas. Das Fenster 9 ist vorzugsweise als optisches Element ausgebildet oder umfasst ein derartiges optisches Element, zum Beispiel eine Linse oder einen Strahlungsleiter.

Die Hülse 18 weist eine Bohrung oder Durchbohrung auf. Das transparente Fenster 9 und die Platine 6 oder der Sockel 17 verschließen die Durchbohrung der hohlen Hülse 18 derart, dass eine, vorzugsweise hermetisch verschlossene, Kammer 19 gebildet ist, in welcher das zumindest eine optische Halbleiterelement 3 aufgenommen ist. Die Platine 6 und / oder der Sockel 17, die Hülse 18 und das Fenster 9 bilden somit eine das zumindest eine optische Halbleiterelement 3 umgebende oder einschließende Kapselung 8. Im Inneren der Kammer 19 oder Kapselung 8 können zum Beispiel neben dem zumindest einen optischen Halbleiterelement 3 ein Konvertierungselement 21 zur Umwandlung der Wellenlänge der von dem zumindest einen optischen Halbleiterelement 3 emittierten Strahlung, ein optisches Bauteil, zum Beispiel ein Lichtleitelement oder ein Reflektorelement, oder ein elektrisches Bauteil zur Anpassung und / oder Übertragung der elektrischen Spannung und / oder Stromstärke für das zumindest eine Halbleiterelement vorgesehen sein.

Vorzugsweise umfasst die Kapselung 8 einen Sockel 17 aus keramischem Material und eine metallische Hülse 18, die über ein Metall und Glas aufweisendes Material und / oder eine Metalllegierung, insbesondere ein Metalllot, und / oder ein Verguß- oder Klebematerial, zum Beispiel ein Silikon- oder Epoxidharz oder ein Silikon- oder Epoxidkleber, verbunden und / oder verlötet sind. Das Metall und Glas aufweisende Material umfasst insbesondere ein Gemisch aus Metall- und Glaspartikeln. Besonders bevorzugt umfasst zumindest ein elektrischer Kontakt, zum Beispiel ein elektrischer Kontakt 7A, 7B, 7C an der Oberfläche des Sockels 17 und / oder ein den Sockel durchsetzender elektrischer Kontakt, der / die zur Verbindung des optischen Halbleiterelements 3 mit der elektrischen Signalleitung 5 oder einer elektrischen Energiequelle ausgebildet ist / sind, ein Metall und Glas aufweisendes Material, insbesondere ein Gemisch aus Metall- und Glaspartikeln. Die elektrischen Kontakt 7A, 7B, 7C sind elektrisch voneinander getrennt oder isoliert, insbesondere in dem sie räumlich voneinander getrennt auf der ein elektrisch isolierendes Material aufweisenden Platine 6 oder auf dem ein elektrisch isolierendes Material aufweisenden Sockel 17 angeordnet sind.

Die gemeinsame elektrische Signalleitung 5 verbindet die Beleuchtungsvorrichtung 2, insbesondere das zumindest eine optische Halbleiterelement 3, und den Temperatursensor 4 mit einer oder mehreren elektrischen Energiequellen 14, 15 (siehe Figur 6). Die gemeinsame elektrische Signalleitung 5 ist des Weiteren dazu ausgebildet, ein Messsignal von dem Temperatursensor 4 an eine Steuer- und / oder Regelvorrichtung 13 (siehe Figur 6) zu übertragen. Demgemäß ist die gemeinsame elektrische Signalleitung 5 elektrisch mit der Steuer- und / oder Regelvorrichtung 13 verbunden oder verbindbar. Die gemeinsame elektrische Signalleitung 5 umfasst zumindest einen elektrisch leitenden, vorzugsweise elektrisch isolierten, Leiter oder Draht, zum Beispiel einen Kupferdraht.

Im Folgenden sind die die Ausführungsbeispiele der Figuren 1A, 1 B; 2A, 2B; 3A, 3B; 4A, 4B; 5A, 5B unterscheidenden Merkmale beschrieben:
Bei den Ausführungsbeispielen gemäß den Figuren 1A, 1B; 2A, 2B; 3A, 3B verbindet die Beleuchtungsvorrichtung 2, insbesondere der Sockel 17 oder die Platine 6, den Temperatursensor 4 elektrisch mit der zumindest einen gemeinsamen elektrischen Signalleitung 5. Dazu sind auf dem Sockel 17 oder auf der Platine 6, insbesondere auf einer Oberfläche des Sockel 17 oder der Platine 6, elektrisch leitende Kontakte 7A, 7B, 7C vorgesehen, insbesondere Metalllegierungen (so genannte Metall-Pads), die elektrisch mit der gemeinsamen elektrischen Signalleitung 5 verbunden, zum Beispiel verlötet, sind. Von diesen elektrischen Kontakten 7A, 7B, 7C besteht eine (im Vorstehenden bereits beschriebene) elektrische Verbindung durch oder über den Sockel 17 oder die Platine 6 zu dem zumindest einen optischen Halbleiterelement 3, so dass das optische Halbleiterelement 3 mit elektrischer Energie versorgbar ist. Des Weiteren verbinden die elektrischen Kontakte 7A, 7B, 7C die gemeinsame elektrische Signalleitung 5 elektrisch mit dem Temperatursensor 4, so dass der Temperatursensor 4 mit elektrischer Energie versorgbar ist und ein Messsignal von dem Temperatursensor 4 über die gemeinsame elektrische Signalleitung 5 an eine Steuer- und / oder Regelvorrichtung 13 übertragbar ist.

Bei den Ausführungsbeispielen der Figuren 1A, 1B; 2A, 2B ist der Temperatursensor 4 unmittelbar auf der Platine 6 / dem Sockel 17 oder unmittelbar auf zumindest einem auf der Platine 6 / dem Sockel 17 aufgebrachten elektrischen Kontakt 7A, 7B, 7C befestigt. Demgemäß ist der Temperatursensor 4 vorzugsweise als oberflächenmontiertes Bauelement (SMD-Bauteil) ausgebildet und ist insbesondere mittels Oberflächenmontage auf zumindest einem elektrischen Kontakt 7A, 7B, 7C befestigt, zum Beispiel aufgelötet.

Bei dem Ausführungsbeispiel gemäß den Figuren 1A, 1B sind der Temperatursensor 4, zum Beispiel ein Sensor mit einem Material, dessen elektrischer Widerstand temperaturabhängig ist, insbesondere einen NTC-Widerstand, und das zumindest eine optische Halbleiterelement 3 elektrisch parallel angeordnet oder geschaltet. Dazu sind zwei elektrisch voneinander isolierte Kontakte 7A, 7B auf der Platine 6 / dem Sockel 17 vorgesehen, wobei jeweils ein elektrischer Kontakt oder Anschluss des Temperatursensors 4 mit je einem der elektrischen Kontakte 7A, 7B verbunden ist. In gleicher Weise ist jeweils ein elektrischer Kontakt oder Anschluss des zumindest einen optischen Halbleiterelements 3 mit je einem der elektrischen Kontakte 7A, 7B verbunden. Des Weiteren ist jeweils einer der beide elektrischen Kontakte 7A, 7B mit jeweils einem Leiter 5', 5" der gemeinsamen elektrischen Signalleitung 5 elektrisch verbunden. Die Versorgung mit elektrischer Energie erfolgt für das optische Halbleiterelement 3 somit zum Beispiel von dem Leiter 5', über den Kontakt 7A, das optische Halbleiterelement 3 und den Kontakt 7B in den Leiter 5". Die Versorgung mit elektrischer Energie erfolgt für den Temperatursensor 4 zum Beispiel von dem Leiter 5" über den Kontakt 7B, den Temperatursensor 4 und den Kontakt 7A in den Leiter 5'. Die gemeinsame elektrische Leitung 5, zum Beispiel deren Leiter 5`, ist somit auch ausgebildet, das Temperaturmesssignal an die Steuer- und / oder Regelvorrichtung 13 zu übertragen. Die beschriebenen Stromflussrichtungen sind beispielhaft und es ist somit klarerweise auch möglich, dass die Stromflussrichtungen für den Temperatursensor 4 und das optische Halbleiterelement 3 umgekehrt ausgebildet sind.

Die Versorgung des optischen Halbleiterelements 3 und des Temperatursensors 4 mit elektrischer Energie sowie die Signalübertragung des elektrischen Temperaturmesswerts erfolgen bei dem Ausführungsbeispiel gemäß den Figuren 1A, 1B und bei allen weiteren Ausführungsbeispielen, bei denen der Temperatursensor 4 und das zumindest eine optische Halbleiterelement 3 elektrisch parallel angeordnet oder geschaltet sind (Fig. 3A, 3B; Fig. 4A, 4B), bevorzugt zeitlich versetzt oder abwechselnd und / oder durch Umschalten zwischen einer Konstantstromquelle und einer Konstantspannungsquelle und / oder durch Änderung der Richtung der elektrischen Potentiale und damit der Stromflussrichtung bei der Versorgung des optischen Halbleiterelements 3 mit einem ersten elektrischen Signal und bei der Versorgung des Temperatursensors 4 mit einem zweiten elektrischen Signal. Dies wird weiter unten unter Bezugnahme auf die Figur 6 noch im Detail beschrieben.

Bei dem Ausführungsbeispiel gemäß den Figuren 2A, 2B sind der Temperatursensor 4, zum Beispiel ein Sensor mit einem Material, dessen elektrischer Widerstand temperaturabhängig ist, insbesondere einen NTC-Widerstand, und das zumindest eine optische Halbleiterelement 3 elektrisch in Serie angeordnet oder geschaltet. Auf der Platine 6 / dem Sockel 17 sind drei elektrisch voneinander isolierte Kontakte 7A, 7B, 7C vorgesehen, wobei zwei elektrische Kontakte 7A, 7B mit jeweils einem Leiter 5', 5" der gemeinsamen elektrischen Signalleitung 5 elektrisch verbunden sind. Der Temperatursensors 4 ist mit jeweils einem seiner elektrischen Kontakte oder Anschlüsse mit jeweils einem elektrischen Kontakt 7B und 7C verbunden. Schließlich ist jeweils ein elektrischer Kontakt oder Anschluss des zumindest einen optischen Halbleiterelements 3 mit je einem der elektrischen Kontakte 7A, 7C verbunden. Demgemäß erfolgt die Versorgung mit elektrischer Energie für den Temperatursensor 4 und für das optische Halbleiterelement 3 und die Übertragung des Messsignale gleichzeitig, zum Beispiel von dem Leiter 5' über den Kontakt 7A, das optische Halbleiterelement 3, den elektrischen Kontakt 7C, den Temperatursensor 4 und den Kontakt 7B in den Leiter 5' (oder alternativ in die entgegengesetzte Stromflussrichtung).

Zur elektrischen Energieversorgung des Temperatursensors 4 und des optischen Halbleiterelements 3 sowie zur Bestimmung des Temperaturmesswerts gemäß dem Ausführungsbeispiel der Figuren 2A, 2B und aller weiteren Ausführungsbeispielen, bei denen der Temperatursensor 4 und das zumindest eine optische Halbleiterelement 3 elektrisch in Serie angeordnet oder geschaltet sind (Fig. 5A, 5B), ist eine Steuer- und / oder Regelvorrichtung mit zum Beispiel einer Konstantspannungsquelle vorgesehen, die ausgebildet ist, eine Konstantstromquelle elektrisch zu versorgen, welche der Beleuchtungsvorrichtung 2, insbesondere dem zumindest einen Halbleiterelement 3, einen Konstantstrom zur Verfügung stellt. Des Weiteren ist ein Stromregler vorgesehen, der ausgebildet ist, die durch Temperatursensor 4 verursachte, temperaturabhängige Spannungsänderung auszugleichen. Eine mit dem Stromregler verbundene Überwachungseinheit ist ausgebildet, das Regelverhalten des Stromregler zu detektieren und auf Basis des detektierten Regelverhaltens einen Temperaturmesswert zu bestimmen.

Bei dem Ausführungsbeispiel gemäß den Figuren 3A, 3B sind die Platine 6 oder der Sockel 17 und der Temperatursensor 4 voneinander beabstandet und durch eine elektrische Signalleitung 5C miteinander elektrisch verbunden. Die elektrische Signalleitung 5C ist elektrisch mit den elektrischen Kontakten 7A, 7B verbunden, insbesondere auch mechanisch daran befestigt, zum Beispiel verlötet. Im Übrigen entsprechen der Aufbau und die Funktion der elektrischen Signalleitung 5C dem Aufbau und der Funktion der im Vorstehenden beschriebenen gemeinsamen elektrischen Signalleitung 5. Die Versorgung mit elektrischer Energie erfolgt für das optische Halbleiterelement 3 somit zum Beispiel von dem Leiter 5', über den Kontakt 7A, das optische Halbleiterelement 3 und den Kontakt 7B in den Leiter 5". Die Versorgung mit elektrischer Energie erfolgt für den Temperatursensor 4 zum Beispiel von dem Leiter 5" über den Kontakt 7B, einen ersten elektrischen Leiter der Signalleitung 5C, den Temperatursensor 4, einen zweiten elektrischen Leiter der Signalleitung 5C und den Kontakt 7A in den Leiter 5'. Der Leiter 5' ist somit auch ausgebildet, das Temperaturmesssignal an die Steuer- und / oder Regelvorrichtung 13 zu übertragen. Die beschriebenen Stromflussrichtungen sind beispielhaft und es ist somit klarerweise auch möglich, dass die Stromflussrichtungen für den Temperatursensor 4 und das optische Halbleiterelement 3 umgekehrt sind.

Der Temperatursensor 4, zum Beispiel ein Sensor mit einem Material, dessen elektrischer Widerstand temperaturabhängig ist, insbesondere einen NTC-Widerstand, und das zumindest eine optische Halbleiterelement 3 sind wiederum elektrisch parallel angeordnet oder geschaltet. Die Versorgung des optischen Halbleiterelements 3 und des Temperatursensors 4 mit elektrischer Energie sowie die Signalübertragung des elektrischen Temperaturmesswerts erfolgen demgemäß gleich wie für das Ausführungsbeispiel der Figuren 1A, 1B beschrieben und im Weiteren unter Bezug auf die Figur 6 noch detailliert dargelegt.

Selbstverständlich ist es auch möglich, die Platine 6 oder den Sockel 17 und den Temperatursensor 4 voneinander beabstandet und durch eine elektrische Signalleitung 5C miteinander elektrisch verbunden auszubilden und elektrisch in Serie anzuordnen oder zu schalten. Eine derartige Ausführungsform umfasst zum Beispiel eine Platine 6 oder einen Sockel 17 mit drei elektrischen Kontakten 7A, 7B, 7C, wie sie in der Figur 2B dargestellt sind, sowie einen Temperatursensor 4, der über eine Signalleitung 5C, wie sie in den Figuren 3A, 3B dargestellt ist, mit zwei Kontakten 7B, 7C elektrisch verbunden ist.

Bei dem Ausführungsbeispiel gemäß den Figuren 4A, 4B weist die zumindest eine gemeinsame elektrische Signalleitung 5 eine erste, mit dem zumindest einen optischen Halbleiterelement 3 verbundene elektrische Zweigleitung 5A und eine zweite mit dem Temperatursensor 4 verbundene elektrische Zweigleitung 5B auf. Die Zweigleitungen 5A, 5B sind zum Beispiel mit der elektrischen Signalleitung 5 und / oder miteinander verlötet oder mechanisch verbunden. Das Ausführungsbeispiel gemäß den Figuren 4A, 4B zeigt den Temperatursensor 4, zum Beispiel ein Thermoelement, und das optische Halbleiterelement 3 elektrisch parallel zueinander angeordnet, so dass die Versorgung des optischen Halbleiterelements 3 und des Temperatursensors 4 mit elektrischer Energie entsprechend dem Ausführungsbeispiel der Figuren 1A, 1B bzw. der Figur 6 erfolgt.

Das Ausführungsbeispiel gemäß den Figuren 5A, 5B zeigt den Temperatursensor 4, zum Beispiel ein Thermoelement, und das optische Halbleiterelement 3 elektrisch in Serie angeordnet. Der Temperatursensor ist insbesondere unmittelbar in die elektrisch Signalleitung 5 oder zumindest in einen ihrer Leiter 5', 5" integriert. Die elektrische Energieversorgung des Temperatursensors 4 und des optischen Halbleiterelements 3 sowie die Bestimmung des Temperaturmesswerts erfolgt gleich wie im Vorstehenden für die Figuren 2A, 2B beschrieben.

Die Figur 6 zeigt eine schematische Darstellung einer Steuer- und / oder Regelvorrichtung 13, vorzugsweise mit einem Mikrocontroller 22, mit einer elektrischen Energiequelle in Form einer Gleichstrom- und / oder Gleichspannungsquelle und mit einer Schaltvorrichtung 23. Die Steuer- und / oder Regelvorrichtung 13 ist zur Versorgung des Temperatursensors 4 und des zumindest einen optischen Halbleiterelements 3 mit elektrischer Energie vorgesehen, insbesondere wenn der Temperatursensor 4 und das Halbleiterelement elektrisch parallel angeordnet oder geschaltet sind (siehe zum Beispiel Fig. 1A, 1 B; 3A, 3B; Fig. 4A, 4B).

Die elektrische Energiequelle umfasst eine Konstantstromquelle 14 und eine Konstantspannungsquelle 15. Die Steuer- und / oder Regelvorrichtung 13 oder die Schaltvorrichtung 23 sind ausgebildet, zeitlich versetzt oder abwechselnd das zumindest eine optische Halbleiterelement 3 der Beleuchtungsvorrichtung 2 und den Temperatursensor 4 über die gemeinsame elektrische Signalleitung 5, 5', 5" mit der elektrischen Energiequelle zu verbinden. Die Steuer- und / oder Regelvorrichtung 13 oder die Schaltvorrichtung 23 sind insbesondere dazu ausgebildet, durch Umschalten zwischen der Konstantstromquelle 14 und der Konstantspannungsquelle 15 abwechselnd dem zumindest einen optischen Halbleiterelement 3 ein erstes elektrisches Signal in Form eines Konstantstroms (I_{LED}) und dem Temperatursensor 4 ein zweites elektrisches Signal in Form eines elektrischen Stroms (I_{TEMP}) zur Verfügung zu stellen. Die Steuer- und / oder Regelvorrichtung 13 ist schließlich dazu ausgebildet, durch Änderung der Richtung der elektrischen Potentiale und damit der Stromflussrichtung dem optischen Halbleiterelement 3 und dem Temperatursensor 4 die elektrische Energie in unterschiedlichen oder entgegengesetzten Stromflussrichtungen zur Verfügung zu stellen, so dass insbesondere das dem Temperatursensor 4 zugeordnete zweite elektrische Signal (I_{TEMP}) in die Sperrrichtung des optischen Halbleiterelements 3 fließt und somit das optische Halbleiterelement 3 nicht bestromt. Die Frequenz, mit welcher das erste und zweite elektrische Signal abwechselnd abgegeben werden, liegt in etwa bei größer 25 Hz, bevorzugt bei etwa 50 - 100 Hz.

Die Steuer- und / oder Regelvorrichtung 13 umfasst des Weiteren eine Anpassvorrichtung oder ein Anpassnetzwerk 24, welches ausgebildet ist, das zweite elektrische Signal (I_{TEMP}) oder Temperaturmesssignal (nach dem Passieren des Temperatursensors 4), insbesondere dessen Spannungswert, derart anzupassen, dass der Mikrocontroller 22 das Signal verarbeiten oder auswerten kann. Die Anpassvorrichtung 24 und / oder der Mikrocontroller 22 können weitere Vorrichtungen zum Bearbeiten des zweiten elektrischen Signals (I_{TEMP}) oder Temperaturmesssignals aufweisen, zum Beispiel ein Filter, einen Signalverstärker oder einen Analog-Digital-Wandler.

Die Steuer- und / oder Regelvorrichtung 13 ist ausgebildet, ein Temperaturmesssignal von dem Temperatursensor 4 zu empfangen, mit einem vorbestimmten Temperaturgrenzwert zu vergleichen und bei Erreichen oder Überschreiten des vorbestimmten Temperaturgrenzwerts den Betrieb des Handstücks 1, 1A zu unterbrechen und / oder eine Warnvorrichtung 16 (siehe Figur 8) zur Warnung des Anwenders zu betätigen.

Die Figuren 7 und 8 zeigen zwei medizinische, insbesondere dentale, Behandlungsvorrichtung 12, 12`, die umfassen: Ein medizinisches, insbesondere dentales, Handstück 1, 1A, einen Temperatursensor 4, eine Beleuchtungsvorrichtung 2, eine Steuer- und / oder Regelvorrichtung 13, welche insbesondere ausgebildet ist, abwechselnd ein der Beleuchtungsvorrichtung 2, insbesondere dem zumindest einen optischen Halbleiterelement 3, zugeordnetes erstes elektrisches Signal und ein dem Temperatursensor 4 zugeordnetes zweites elektrisches Signal abzugeben, und zumindest eine gemeinsame, im Handstück 1, 1A vorgesehenen elektrischen Signalleitung 5, die den Temperatursensor 4 und die Beleuchtungsvorrichtung 2 elektrisch mit einer elektrischen Energiequelle verbindet.

Die Handstücke 1, 1A weisen ein Kopfteil 10 auf, an dem eine in eine Arbeitsbewegung versetzbare Werkzeughalterung 11 und eine Werkzeugaufnahmeöffnung 25 vorgesehen sind. Bevorzugt sind am oder im Kopfteil 10 auch der Temperatursensor 4 und die Beleuchtungsvorrichtung 2 vorgesehen. Am oder im Kopfteil 10 können auch noch weitere Bauteile vorgesehen sein, zum Beispiel eine Werkzeuglösevorrichtung zum Lösen eines Werkzeugs aus der Werkzeughalterung 11, ein Antriebselement, zum Beispiel ein Zahnrad oder ein durch ein Druckgas antreibbares Laufrad, oder zumindest ein Lager zur beweglichen Lagerung der Werkzeughalterung 11, zum Beispiel ein Wälzlager.

Die Beleuchtungsvorrichtung 2 ist ringförmig um die Werkzeugaufnahmeöffnung 25 ausgebildet und umfasst einen Körper und eine den Körper durchdringende Bohrung, durch welche ein Werkzeug in die Werkzeugaufnahmeöffnung 25 und die Werkzeughalterung 11 1 einsetzbar ist. Vorzugsweise ist an und / oder in dem Körper der Beleuchtungsvorrichtung 2 zumindest eine Bohrung 26 und / oder zumindest ein Ringkanal 27 und / oder zumindest eine Öffnung 28 vorgesehen, die, zum Beispiel über eine Fluidleitung, mit einer Fluidquelle, zum Beispiel einer Wasser- und / oder Druckluftquelle, verbunden ist. Die Beleuchtungsvorrichtung 2 verbindet des Weiteren die zumindest eine gemeinsame, im Handstück 1, 1A vorgesehene elektrische Signalleitung 5 elektrisch mit dem Temperatursensor 4. Die Beleuchtungsvorrichtung 2 und der Temperatursensor 4 sind elektrisch parallel zueinander angeordnet.

Der in der Figur 7 dargestellte Temperatursensor 4, zum Beispiel einen Sensor mit einem Material, dessen elektrischer Widerstand temperaturabhängig ist, insbesondere einen NTC-Widerstand, ist unmittelbar auf der Platine 6 / dem Sockel 17 oder unmittelbar auf zumindest einem auf der Platine 6 / dem Sockel 17 aufgebrachten elektrischen Kontakt 7A, 7B, 7C der Beleuchtungsvorrichtung 2 befestigt. Die Anordnung des Temperatursensors 4 entspricht insbesondere der Ausführungsform gemäß den Figuren 1A, 1B, so dass die in Zusammenhang mit den Figuren 1A, 1B beschriebenen Merkmale auch auf den Temperatursensor 4, die Beleuchtungsvorrichtung 2 und die eine gemeinsame elektrische Signalleitung 5 der Figur 7 zutreffen.

Im Gegensatz dazu ist der Temperatursensor 4 der Figur 8, zum Beispiel ein Sensor mit einem Material, dessen elektrischer Widerstand temperaturabhängig ist, insbesondere ein NTC-Widerstand, von der Platine 6 oder dem Sockel 17 beabstandet und durch eine elektrische Signalleitung 5C elektrisch mit der Platine 6 oder dem Sockel 17 verbunden. Die Anordnung des Temperatursensors 4 entspricht insbesondere der Ausführungsform gemäß den Figuren 3A, 3B, so dass die in Zusammenhang mit den Figuren 3A, 3B beschriebenen Merkmale auch auf den Temperatursensor 4, die Beleuchtungsvorrichtung 2 und die eine gemeinsame elektrische Signalleitung 5 der Figur 8 zutreffen.

Die in den Figuren 7 und 8 dargestellte Steuer- und / oder Regelvorrichtung 13 entspricht insbesondere in ihrem Aufbau und / oder in Ihrer Funktion der Steuer- und / oder Regelvorrichtung 13 der Figur 6, so dass die in Zusammenhang mit der Figur 6 beschriebenen Merkmale auch auf die Steuer- und / oder Regelvorrichtungen 13 der Figuren 7 und 8 zutreffen. Die Steuer- und / oder Regelvorrichtung 13 ist entweder in dem Handstück 1 (siehe Figur 7) oder außerhalb des Handstücks 1A (siehe Figur 8) vorgesehen, zum Beispiel in einer Versorgungseinheit, die über eine Versorgungsleitung mit dem Handstück 1A verbunden ist. Eine Warnvorrichtung 16 zur Warnung des Anwenders bei Erreichen oder Überschreiten eines Temperaturwertes ist entweder unmittelbar an der Steuer- und / oder Regelvorrichtungen 13 vorgesehen (siehe Figur 8) oder mit dieser elektrisch über eien Leitung verbunden.

## Patentansprüche

1. Medizinisches, insbesondere dentales, Handstück (1, 1A), umfassend: Eine Beleuchtungsvorrichtung (2) zur Abgabe von Strahlung, insbesondere von sichtbarem Licht, auf eine Behandlungsstelle, und einen, vorzugsweise im Inneren des Handstücks (1, 1A) angeordneten, Temperatursensor (4), **gekennzeichnet durch** zumindest eine gemeinsame, im Handstück (1, 1A) vorgesehene elektrische Signalleitung (5) für die Beleuchtungsvorrichtung (2) und den Temperatursensor (4).

2. Medizinisches, insbesondere dentales, Handstück (1, 1A) nach Anspruch 1, **dadurch gekennzeichnet, dass**
die zumindest eine gemeinsame, im Handstück (1, 1A) vorgesehene elektrische Signalleitung (5) eine erste, mit der Beleuchtungsvorrichtung (2) verbundene elektrische Zweigleitung (5A) und eine zweite mit dem Temperatursensor (4) verbundene elektrische Zweigleitung (5B) aufweist.

3. Medizinisches, insbesondere dentales, Handstück (1, 1A) nach Anspruch 1, **dadurch gekennzeichnet, dass**
die Beleuchtungsvorrichtung (2) die zumindest eine gemeinsame, im Handstück (1, 1A) vorgesehene elektrische Signalleitung (5) mit dem Temperatursensor (4) elektrisch verbindet.

4. Medizinisches, insbesondere dentales, Handstück (1, 1A) nach Anspruch 3, **dadurch gekennzeichnet, dass**
die Beleuchtungsvorrichtung (2) eine Platine (6) aufweist, wobei die zumindest eine gemeinsame, im Handstück (1, 1A) vorgesehene elektrische Signalleitung (5) über die Platine (6) oder über auf der Platine (6) aufgebrachte elektrische Kontakte (7A, 7B) mit dem Temperatursensor (4) elektrisch verbunden ist.

5. Medizinisches, insbesondere dentales, Handstück (1, 1A) nach Anspruch 4, **dadurch gekennzeichnet, dass**
die Platine (6) und der Temperatursensor (4) voneinander beabstandet und insbesondere durch eine elektrische Signalleitung (5C) miteinander elektrisch verbunden sind.

6. Medizinisches, insbesondere dentales, Handstück (1, 1A) nach Anspruch 4, **dadurch gekennzeichnet, dass**
der Temperatursensor (4) unmittelbar auf der Platine (6) oder unmittelbar auf zumindest einem auf der Platine (6) aufgebrachten elektrischen Kontakt (7A, 7B, 7C) befestigt ist.

7. Medizinisches, insbesondere dentales, Handstück (1, 1A) nach einem der vorstehenden Ansprüche, **dadurch gekennzeichnet, dass**
die Beleuchtungsvorrichtung (2) ein Kapselung (8) mit einem transparenten Fenster (9) aufweist, wobei zumindest ein optisches Halbleiterelement (3) in der Kapselung (8) aufgenommen ist und wobei bevorzugt die Kapselung (8) einen die Platine (6) umfassenden Sockel (17) aufweist.

8. Medizinisches, insbesondere dentales, Handstück (1, 1A) nach einem der vorstehenden Ansprüche, **dadurch gekennzeichnet, dass**
der Temperatursensor (4) direkt oder indirekt an der Beleuchtungsvorrichtung (2) befestigt ist.

9. Medizinisches, insbesondere dentales, Handstück (1, 1A) nach einem der vorstehenden Ansprüche, **dadurch gekennzeichnet, dass**
das Handstück (1, 1A) ein Kopfteil (10) aufweist, an welchem eine in eine Bewegung versetzbare Werkzeughalterung (11) vorgesehen ist, wobei der Temperatursensor (4) in dem Kopfteil (10) oder angrenzend an das Kopfteil (10) angeordnet ist.

10. Medizinische, insbesondere dentale, Behandlungsvorrichtung (12, 12'), **gekennzeichnet durch**
ein medizinisches, insbesondere dentales, Handstück (1, 1A) nach einem der vorstehenden Ansprüche und eine elektrisch mit der zumindest einen gemeinsamen, im Handstück (1, 1A) vorgesehenen elektrischen Signalleitung (5) verbundene Steuer- und / oder Regelvorrichtung (13), welche ausgebildet ist, ein der Beleuchtungsvorrichtung (2) zugeordnetes erstes elektrisches Signal und ein dem Temperatursensor (4) zugeordnetes zweites elektrisches Signal abzugeben.

11. Medizinische, insbesondere dentale, Behandlungsvorrichtung (12, 12'), nach Anspruch 10, **dadurch gekennzeichnet, dass**
die Steuer- und / oder Regelvorrichtung (13) ausgebildet ist, das erste elektrische Signal und das zweite elektrische Signal abwechselnd oder zeitlich versetzt abzugeben.

12. Medizinische, insbesondere dentale, Behandlungsvorrichtung (12, 12'), nach Anspruch 10 oder 11, **dadurch gekennzeichnet, dass**
die Steuer- und / oder Regelvorrichtung (13) zur Sendung des ersten und zweiten elektrischen Signals in unterschiedliche Stromflussrichtungen ausgebildet ist.

13. Medizinische, insbesondere dentale, Behandlungsvorrichtung (12, 12'), nach einem der Ansprüche 10 - 12, **dadurch gekennzeichnet, dass**
die Steuer- und / oder Regelvorrichtung (13) eine Konstantstromquelle (14) zum Erzeugen des ersten elektrischen Signals und eine Konstantspannungsquelle (15) zum Erzeugen des zweiten elektrischen Signals aufweist.

14. Medizinische, insbesondere dentale, Behandlungsvorrichtung (12, 12'), nach Anspruch 10, **dadurch gekennzeichnet, dass**
die Steuer- und / oder Regelvorrichtung (13) ausgebildet ist, das erste elektrische Signal und das zweite elektrische Signal im Wesentlichen gleichzeitig abzugeben, wobei das erste und das zweite elektrische Signal vorzugsweise durch einen Konstantstrom mit einem aufmodulierten Wechselstromanteil gebildet sind.

15. Medizinische, insbesondere dentale, Behandlungsvorrichtung (12, 12'), nach einem der Ansprüche 10 - 14, **dadurch gekennzeichnet, dass**
die Steuer- und / oder Regelvorrichtung (13) ausgebildet ist, ein Temperaturmesssignal von dem Temperatursensor (4) zu empfangen, mit einem vorbestimmten Temperaturgrenzwert zu vergleichen und bei Erreichen oder Überschreiten des vorbestimmten Temperaturgrenzwerts den Betrieb des Handstücks (1, 1A) zu unterbrechen oder die Leistung eines Antriebs des Handstücks (1, 1A) zu verändern und / oder eine Warnvorrichtung (16) zur Warnung des Anwenders zu betätigen.

## Claims

1. A medical, in particular dental, handpiece (1, 1A) comprising: a lighting device (2) for emitting radiation, in particular visible light onto a treatment site, and a temperature sensor (4), preferably disposed in the interior of the handpiece (1, 1A), **characterized by**
at least one common electrical signal line (5) provided in the handpiece (1, 1A) for the lighting device (2) and the temperature sensor (4).

2. The medical, in particular dental, handpiece (1, 1A) according to Claim 1, **characterized in that**
the at least one common electrical signal line (5) provided in the handpiece (1, 1A) comprises a first electrical branch line (5A) connected to the lighting device (2) and a second electrical branch line (5B) connected to the temperature sensor (4).

3. The medical, in particular dental, handpiece (1, 1A) according to Claim 1, **characterized in that**
the lighting device (2) electrically connects the at least one common electrical signal line (5) provided in the handpiece (1, 1A) to the temperature sensor (4).

4. The medical, in particular dental, handpiece (1, 1A) according to Claim 3, **characterized in that**
the lighting device (2) comprises a circuit board (6), wherein the at least one common electrical signal line (5) provided in the handpiece (1, 1A) is electrically connected to the temperature sensor (4) via the circuit board (6) or via electrical contacts (7A, 7B) applied to the circuit board (6).

5. The medical, in particular dental, handpiece (1, 1A) according to Claim 4, **characterized in that**
the circuit board (6) and the temperature sensor (4) are spaced apart from one another and in particular are connected electrically to one another by means of an electrical signal line (5C).

6. The medical, in particular dental, handpiece (1, 1A) according to Claim 4, **characterized in that**
the temperature sensor (4) is attached directly to the circuit board (6) or directly to at least one electrical contact (7A, 7B, 7C) applied to the circuit board (6).

7. The medical, in particular dental, handpiece (1, 1A) according to any one of the preceding claims, **characterized in that**
the lighting device (2) comprises an encapsulation (8) with a transparent window (9), wherein at least one optical semiconductor element (3) is accommodated in the encapsulation (8) and wherein the encapsulation (8) preferably has a base (17) which comprises the circuit board (6).

8. The medical, in particular dental, handpiece (1, 1A) according to any one of the preceding claims, **characterized in that**
the temperature sensor (4) is directly or indirectly attached to the lighting device (2).

9. The medical, in particular dental, handpiece (1, 1A) according to any one of the preceding claims, **characterized in that**
the handpiece (1, 1A) comprises a head part (10) on which a tool holder (11) that can be set in motion is provided, wherein the temperature sensor (4) is disposed in the head part (10) or adjacent to the head part (10).

10. A medical, in particular dental, treatment device (12, 12'), **characterized by** a medical, in particular dental, handpiece (1, 1A) according to any one of the preceding claims and a control and/or regulating device (13), which is electrically connected to the at least one common electrical signal line (5) provided in the handpiece (1, 1A), said control and/or regulating device (13) being designed to emit a first electrical signal assigned to the lighting device (2) and a second electrical signal assigned to the temperature sensor (4).

11. The medical, in particular dental, treatment device (12, 12'), according to Claim 10, **characterized in that**
the control and/or regulating device (13) is designed to emit the first electrical signal and the second electrical signal in alternation or with a time offset.

12. The medical, in particular dental, treatment device (12, 12'), according to Claim 10 or 11, **characterized in that**
the control and/or regulating device (13) is designed for transmitting the first and second electrical signals in different directions of current flow.

13. The medical, in particular dental, treatment device (12, 12'), according to any one of Claims 10-12, **characterized in that**
the control and/or regulating device (13) comprises a constant current source (14) for generating the first electrical signal and a constant voltage source (15) for generating the second electrical signal.

14. The medical, in particular dental, treatment device (12, 12'), according to Claim 10, **characterized in that**
the control and/or regulating device (13) is designed to emit the first electrical signal and the second electrical signal essentially at the same time, wherein the first and the second electrical signals are preferably formed by a constant current having an alternating current component modulated onto it.

15. The medical, in particular dental, treatment device (12, 12'), according to any one of Claims 10-14, **characterized in that**
the control and/or regulating device (13) is designed to receive a temperature measurement signal from the temperature sensor (4), to compare it with a predetermined temperature limit value and, on reaching or exceeding the predetermined temperature limit value, interrupting the operation of the handpiece (1, 1A) or changing the power of a drive of the handpiece (1, 1A) and/or activating a warning device (16) for warning the user.

## Revendications

1. Pièce à main médicale, en particulier dentaire (1, 1A), comprenant: un dispositif d'éclairage (2) pour l'émission d'un rayonnement, en particulier de lumière visible, sur une zone de traitement, et un capteur de température (4) disposé de préférence à l'intérieur de la pièce à main (1, 1A), **caractérisée par**
au moins un conducteur de signal électrique (5) commun prévu dans la pièce à main (1, 1A) pour le dispositif d'éclairage (2) et le capteur de température (4).

2. Pièce à main médicale, en particulier dentaire (1, 1A), selon la revendication 1, **caractérisée en ce que**
l'au moins un conducteur de signal électrique (5) commun prévu dans la pièce à main (1, 1A) présente un premier fil de branchement (5A) électrique relié au dispositif d'éclairage (2) et un second fil de branchement (5B) électrique relié au capteur de température (4).

3. Pièce à main médicale, en particulier dentaire (1, 1 A), selon la revendication 1, **caractérisée en ce que**
le dispositif d'éclairage (2) relie électriquement l'au moins un conducteur de signal électrique (5) commun prévu dans la pièce à main (1, 1A) au capteur de température (4).

4. Pièce à main médicale, en particulier dentaire (1, 1A), selon la revendication 3, **caractérisée en ce que**
le dispositif d'éclairage (2) présente une platine (6), l'au moins un conducteur de signal électrique (5) commun prévu dans la pièce à main (1, 1A) étant relié électriquement via la platine (6), ou via des contacts électriques (7A, 7B) appliqués sur la platine (6), au capteur de température (4).

5. Pièce à main médicale, en particulier dentaire (1, 1A), selon la revendication 4, **caractérisée en ce que**
la platine (6) et le capteur de température (4) sont espacée l'un de l'autre et en particulier reliés électriquement ensemble de manière grâce à un conducteur de signal électrique (5C).

6. Pièce à main médicale, en particulier dentaire (1, 1A), selon la revendication 4, **caractérisée en ce que**
le capteur de température (4) est fixé directement sur la platine (6) ou bien directement sur au moins un contact électrique (7A, 7B, 7C) appliqué sur la platine (6).

7. Pièce à main médicale, en particulier dentaire (1, 1A), selon l'une des revendications précédentes, **caractérisée en ce que**
le dispositif d'éclairage (2) présente une encapsulation (8) avec une fenêtre transparente (9), au moins un élément semi-conducteur optique (3) étant logé dans l'encapsulation (8) et l'encapsulation (8) présentant de préférence un socle (17) comprenant la platine (6).

8. Pièce à main médicale, en particulier dentaire (1, 1A), selon l'une des revendications précédentes, **caractérisée en ce que**
le capteur de température (4) est fixé de manière directe ou indirecte sur le dispositif d'éclairage (2).

9. Pièce à main médicale, en particulier dentaire (1, 1A), selon l'une des revendications précédentes, **caractérisée en ce que**
la pièce à main (1, 1A) présente une partie de tête (10) sur laquelle est prévu un porte-outil (11) pouvant être mis en mouvement, le capteur de température (4) étant disposé dans la partie de tête (10) ou de manière adjacente à la partie de tête (10).

10. Dispositif de traitement médical, en particulier dentaire (12, 12'), **caractérisé par** une pièce à main médicale, en particulier dentaire (1, 1A) selon l'une des revendications précédentes et un dispositif de commande et/ou de réglage (13) relié électriquement à l'au moins un conducteur de signal électrique (5) commun prévu dans la pièce à main (1, 1A), lequel est réalisé de manière à émettre un premier signal électrique associé au dispositif d'éclairage (2) et un second signal électrique associé au capteur de température (4).

11. Dispositif de traitement médical, en particulier dentaire (12, 12') selon la revendication 10, **caractérisé en ce que**
le dispositif de commande et/ou de réglage (13) est réalisé de manière à émettre le premier signal électrique et le second signal électrique en alternance ou de manière décalée dans le temps.

12. Dispositif de traitement médical, en particulier dentaire (12, 12'), selon la revendication 10 ou 11, **caractérisé en ce que**
le dispositif de commande et/ou de réglage (13) est réalisé pour l'envoi du premier et du second signal électrique dans différentes directions de conduction du courant.

13. Dispositif de traitement médical, en particulier dentaire (12, 12'), selon l'une des revendications 10-12, **caractérisé en ce que**
le dispositif de commande et/ou de réglage (13) présente une source de courant constant (14) pour la génération du premier signal électrique et une source de tension constante (15) pour la génération du second signal électrique.

14. Dispositif de traitement médical, en particulier dentaire (12, 12'), selon la revendication 10, **caractérisé en ce que**
le dispositif de commande et/ou de réglage (13) est réalisé de manière à émettre sensiblement en même temps le premier signal électrique et le second signal électrique, le premier et le second signal électrique étant de préférence formés par un courant constant avec une part de courant alternatif modulée.

15. Dispositif de traitement médical, en particulier dentaire (12, 12') selon l'une des revendications 10-14, **caractérisé en ce que**
le dispositif de commande et/ou de réglage (13) est réalisé de manière à réceptionner un signal de mesure de température du capteur de température (4), à le comparer avec une valeur de seuil de température prédéfinie et, lorsque la valeur de seuil de température prédéfinie est atteinte ou dépassée, à interrompre le fonctionnement de la pièce à main (1, 1A) ou à modifier la puissance d'un entraînement de la pièce à main (1, 1A) et/ou à actionner un dispositif d'alerte (16) pour alerter l'utilisateur.
